# EUROPÄISCHE PATENTANMELDUNG

(11) **EP 1 982 754 A2**
(43) Veröffentlichungstag der Anmeldung: **22.10.2008**
(21) Anmeldenummer: 08103516.4
(22) Anmeldetag: 05.08.2003
(51) Int. Cl.: B01D 46/24, B01D 46/52, F02M 35/024

(54) **Filtersystem**

(30) Priorität: 08.08.2002 DE 10236548
(62) Teilanmeldung aus: 03790859.7
(71) Anmelder: MANN+HUMMEL GmbH, 71638 Ludwigsburg (DE)
(72) Erfinder: Lampert, Johannes, 71686 Remseck (DE); Pelz, Andreas, 70806 Kornwestheim (DE); Mayer, Gerhard, 74385 Pleidelsheim (DE)

(57) **Zusammenfassung**

Es wird ein Filtersystem, insbesondere für die an Ansaugluft einer Brennkraftmaschine vorgeschlagen. Dieses besteht aus einem Gehäuse mit wenigstens 2 Gehäuseteilen, wobei das Gehäuse im Bereich der Befestigung des Filterelements teilbar ist und wobei das Filterelement aus einem Wickelfilter besteht. Der Wickelfilter weist am Umfang eine Profildichtung auf, diese Profildichtung besteht aus einem elastischen Band, welches wulstförmig gestaltet ist. Über diesen Wulst sind die beiden Gehäuseteile einspannbar.

## Beschreibung

### Stand der Technik

Die Erfindung betrifft ein Filtersystem nach dem Oberbegriff des Anspruches 1.

In der Druckschrift US 6 322 602 B2 wird ein Luftfilter beschrieben, der in einem zylindrischen Filtergehäuse ein axial zu durchströmendes Filterelement aufweist. Der Aufnahmeraum zur Aufnahme des Filters im Filtergehäuse ist an einer axialen Stirnseite im Bereich der Anströmseite des Filters von einem Gehäusedeckel zu verschließen, welcher zum Austausch des Filterelementes gelöst wird, woraufhin das Filterelement aus dem Aufnahmeraum axial herausgenommen und durch ein neues Filterelement ersetzt werden kann.

Diese Ausführung weist den Nachteil auf, dass zum Austausch des Filterelements der Gehäusedeckel im Anströmbereich entfernt werden muss, was zunächst eine Demontage des gesamten Filtergehäuses aus seiner Einbauposition voraussetzt, weil der Gehäusedeckel mit den Zuleitungen für die Zufuhr der zu reinigenden Luft verbunden ist. Ein Austausch des Filterelementes ist daher nur mit einem erheblichen Aufwand zu bewerkstelligen, wodurch die Wartungsdauer ansteigt und erhebliche Wartungskosten anfallen.

Der Erfindung liegt das Problem zu Grunde, einen konstruktiv einfach aufgebauten Filter zu schaffen, welcher mit geringem Aufwand gewartet werden kann. Ferner soll auch die Raumausnutzung im Filtergehäuse verbessert werden.

Dieses Problem wird erfindungsgemäß mit den Merkmalen des Anspruches 1 gelöst. Die Unteransprüche geben zweckmäßige Weiterbildungen an.

Der wesentliche Vorteil der Erfindung liegt darin, dass das Filterelement mit einer Profildichtung versehen ist, wobei diese Profildichtung am Umfang des Filterelements verläuft. Diese Dichtung bildet einen Wulst der zwischen den beiden Gehäuseteilen einspannbar ist. Damit wird ein System geschaffen, bei welchem Längentoleranzen des Filterelements bezüglich der Dichtwirkung oder der Gehäuseabmessungen völlig unkritisch sind.

In einer Ausgestaltung der Erfindung, wird vorgeschlagen, den Wulst annäherungsweise rechteckförmig zu gestalten. Dies erleichtert in ganz besonderer Weise die Einspannung zwischen den beiden Gehäuseteilen.

Der Wickelfilter wird in einer weiteren vorteilhaften Ausgestaltung mit einem Kern versehen, dieser Kern ist eine Kunststoffplatte die als Grundlage für die Filterwicklung dient, gleichzeitig weist diese Kunststoffplatte einen Haltegriff auf, der sich axial, ausgehend von dem Wickelfilter, nach außen erstreckt und der eine gute Handhabung des Filterelements ermöglicht.

Gemäß einer weiteren Ausgestaltung kann das Filterelement ein Gehäusemitteilteil aufweisen, welches zwischen den beiden Gehäusehälften angeordnet ist, dabei wird das Gehäusemittelteil auf beiden Seiten mit den entsprechenden Gehäusehälften verspannt. Diese Verspannung kann in einer weiteren Ausgestaltung über Spannbänder erfolgen. Diese Spannbänder greifen über Flanschbereiche der zu verbindenden Teile und stellen eine zuverlässige Verbindung dar.

In einer weiteren Ausgestaltung der Erfindung ist dem Filterelement ein Vorfilter vorgeschaltet, dieser Vorfilter kann ein Zyklonabscheider sein, es kann sich aber auch um einen einfachen Grobfilter in Form eines Netzes handeln. Bei einem Zyklonvorabscheider wird ein hoher Abscheidegrad von groben Partikeln erreicht. Zweckmäßigerweise ist dieser Filter ein Zyklonarray, welches sich über die gesamte stirnseitige Fläche des Filterelements erstrecken kann.

Weiterbildungsgemäß ist dem Filterelement ein Sekundärfilter nachgeschaltet.

Dieser Sekundärfilter hat die Aufgabe, bei einem Austausch des Filterelements den Eintrag von Partikeln in die Reinluftleitung zu verhindern.

Das Gehäuse ist reinluftseitig, gemäß einer Weiterbildung der Erfindung, mit einem Anschlußstutzen versehen. An diesem läßt sich ein Reinluftrohr befestigen. Der Übergang zwischen Reinluftrohr und Gehäuse kann strömungsgünstig optimiert sein um Luftwirbel zu vermeiden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert.

Es zeigt:
- Figur 1a: eine Teilschnittdarstellung eines Filterelements,
- Figur 1b: die Draufsicht auf die in Figur 1a gezeigte Teilschnittdarstellung,
- Figur 2: den Teilschnitt eines weiteren Filterelements,
- Figur 3: ein Filtersystem in einer teilweise geschnittenen Darstellung,
- Figur 4: ein weiteres Filtersystem in einer Schnittdarstellung.

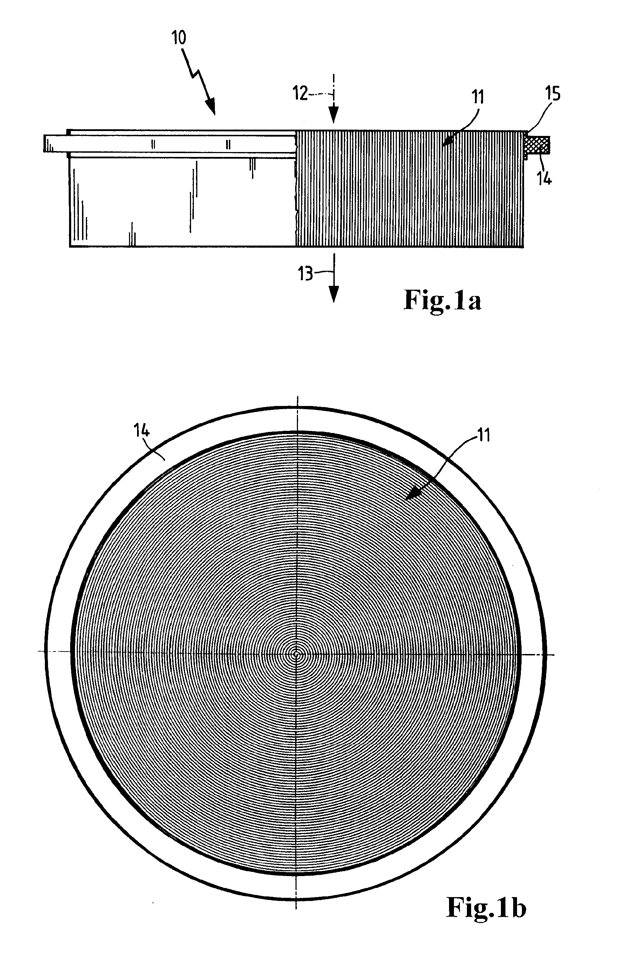

Die Darstellung gemäß Figur 1a zeigt einen Filtereinsatz 10, mit einem Filterwickel 11 der aus einem gewellten Filterpapier oder Filtervlies besteht. Durch die Wellenform entstehen längs gerichtete Kanäle. Diese Kanäle sind wechselseitig verschlossen, so dass die einströmende Luft gemäß Pfeil 12 in die oben geöffneten Kanäle einströmt, das Filtermedium, das heißt das Filterpapier oder Filtervlies durchdringt und gemäß Pfeil 13 gereinigt nach unten abströmt. Der gesamte Filterwickel wird am Umfang von einer rechteckförmig gestalteten Dichtung 14 umgeben. Diese Dichtung besteht beispielsweise aus PUR-Schaum oder aus einem Elastomer und ist umlaufend mit dem Filterwickel verklebt. Die Dichtung weist einen Dichtungsfuß 15 auf, der geringfügig breiter ist als die Dichtung und eine optimale Verbindung zu dem Filterwickel gewährleistet.

Figur 1b zeigt in der Draufsichtdarstellung den Filterwickel 11, der ausgehend von einem Filterkern endlos gewickelt ist und an seinem äußeren Umfang die Dichtung 14 trägt. Die Herstellung eines solchen Elements ist besonders wirtschaftlich. Der Vorteil des Elements liegt in der hohen wirksamen Filterfläche.

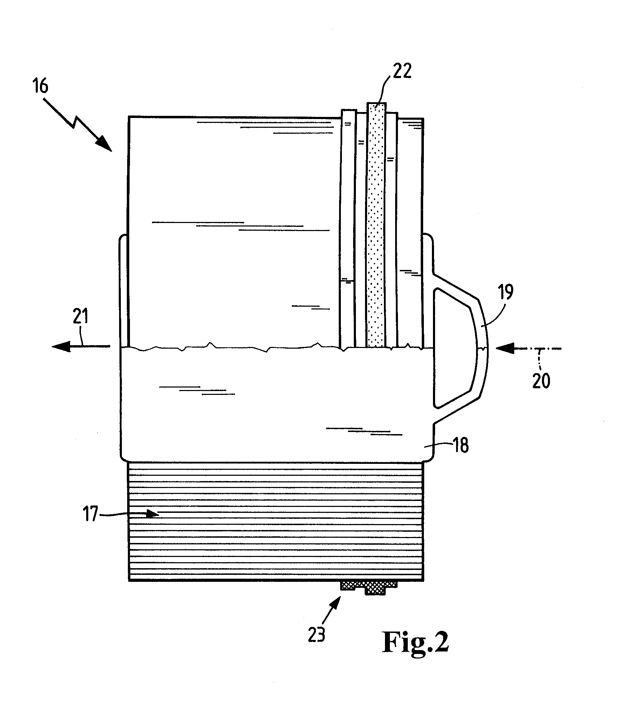

Figur 2 zeigt einen weiteren Filtereinsatz 16. Dieser besteht ebenfalls aus einem Filterwickel 17. Der Filterwickel ist jedoch in seinem Kern an einem Schwert 18 befestigt. Dieses ist ein flaches Kunststoffelement, welches an seinem rechtsseitigen Ende, das heißt an der Anströmseite mit einem Griff 19 versehen ist. Dieser Griff ermöglicht das Einsetzen oder Herausnehmen des Filterelements auch unter schwierigen Bedingungen. Außerdem schützt der Griff vor einer unsachgemäßen Handhabung. Die Verbindung zwischen dem Schwert 18 und dem Filterwickel erfolgt über eine Klebeverbindung. Es genügt völlig den Kleber an den Stirnseiten des Schwerts, das heißt an der rohluftseitigen Öffnung, gemäß Pfeil 20 und an der reinluftseitigen Öffnung zu verteilen.

Die ungereinigte Luft strömt, wie bereits erwähnt gemäß Pfeil 20 durch das Filterelement durch, wird gereinigt und verläßt gemäß Pfeil 21 das Element.

Auch dieser Filtereinsatz trägt eine umlaufende Dichtung 22, die beispielsweise aus PUR-Schaum besteht und ein rechteckförmiges Profil aufweist. Die Dichtung weist zur zuverlässigen Befestigung eine bestimmte axiale Erstreckung auf und geht damit von der Rechteckform über in ein flaches Dichtungsband 23.

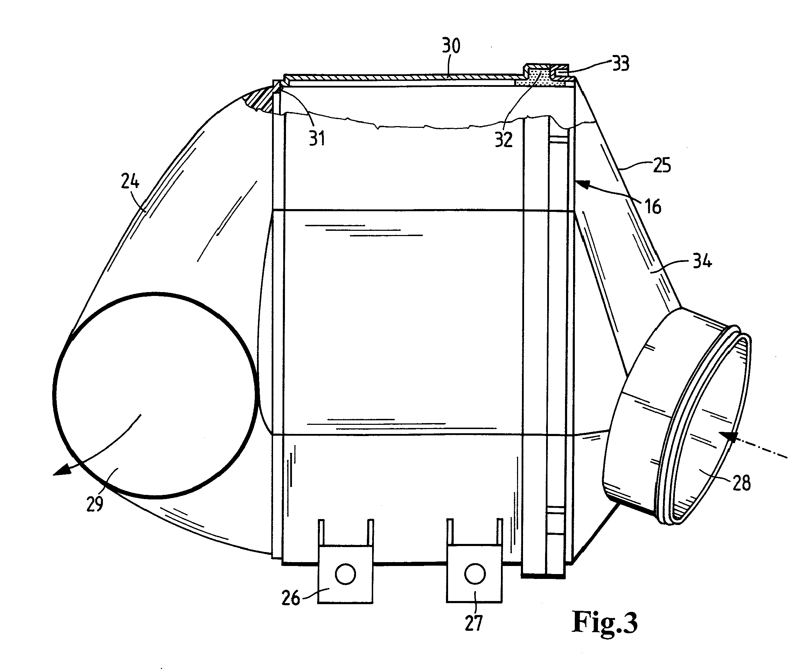

Das Filtersystem gemäß Figur 3 besteht aus einem Gehäuse 24, einem Deckel 25 und einem Filtereinsatz 16, der die Merkmale des in Figur 2 gezeigten Filters aufweist. Gleiche Teile sind mit gleichen Bezugszeichen versehen. Das Gehäuse ist mit Befestigungslaschen 26, 27 versehen. Weitere Befestigungslaschen können sich im oberen Bereich befinden und sind hier nicht dargestellt. Der Deckel 25 ist mit einem Rohlufteinlaß 28 ausgestattet, das Gehäuse 24 mit einem Reinluftauslass 29. An diesem Reinluftauslass 29 wird üblicherweise ein Reinluftschlauch angeschlossen der mit dem Ansaugtrakt einer Brennkraftmaschine verbunden ist. Innerhalb des oval gestalteten Bereichs 30 des Gehäuses, befindet sich der Filtereinsatz 16, er stützt sich an seinem linksseitigen Ende an einer umlaufenden ringförmigen Anlagefläche 31 ab und wird auf der gegenüberliegenden Seite in einer Dichtungsnut 32 geführt. Diese Dichtungsnut wird verschlossen durch einen umlaufenden Dichtungsrand 33 des Deckels 25. Die Befestigung des Deckels am Gehäuse erfolgt durch hier nicht dargestellte Schnappverbindungen oder durch Verbindungsklammern. Eine weitere Befestigung für den Filtereinsatz ist nicht erforderlich.

Sofern eine Vorabscheidung erforderlich ist, kann sich innerhalb des kegelförmigen Bereichs 34 oder innerhalb des Rohlufteinlaß 28 ein Zyklon oder ein Multizyklon befinden. Sofern eine Sekundärfilterelement vorgesehen ist kann dies im Reinluftbereich des Gehäuses 24 angeordnet sein.

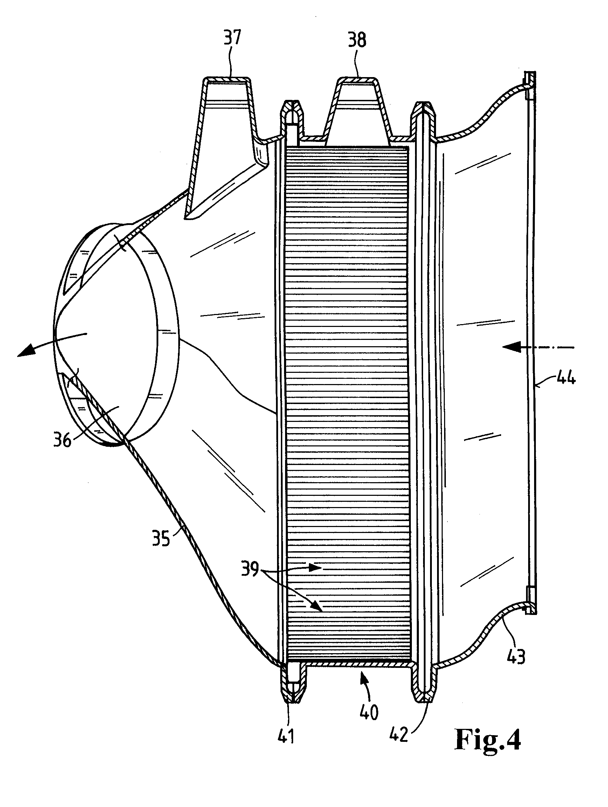

Figur 4 zeigt eine weitere Darstellung eines Filtersystems bei welchem ein Filtereinsatz gemäß Figur 1 zur Anwendung kommt. Das Gehäuse 35 mit dem linksseitig angeordneten Reinluftauslass 36 kann über Befestigungslaschen 37, 38 an einer Grundstruktur fixiert werden. In der hier gezeigten Darstellung trägt das Filterelement 39 ein Gehäusemittelteil 40. Die Trennung zwischen Gehäuse und Gehäusemittelteil erfolgt im Flanschbereich 41 und im Flanschbereich 42. Das rechtsseitig angeordnete Gehäuse 43 hat einen rechteckförmigen Rohlufteinlaß 44. Die Rechteckform geht strömungsgünstig über in die runde Form des Filtereinsatzes. Zum Entfernen des Filtereinsatzes werden die Flanschbereiche 41, 42 getrennt. Der Filtereinsatz kann mit dem Gehäusemittelteil 44 entnommen werden. Es besteht die Möglichkeit, diesen Filtereinsatz aus dem Gehäusemittelteil zu entfernen bzw. den Filtereinsatz zu erneuern. Die Fixierung der drei Gehäuseteile miteinander erfolgt über Spannbänder, die beispielsweise auch zum Verschließen von Behältern jeglicher Art dienen. Der Rohlufteinlaß 44 kann zur Vermeidung des Eintritts von Grobpartikeln mit einem Gitternetz versehen sein.

## Patentansprüche

1. Filtersystem, insbesondere für die Ansaugluft einer Brennkraftmaschine, umfassend:
i) ein Gehäuse mit wenigstens zwei Gehäuseteilen, wobei das Gehäuse im Bereich der Befestigung des Filterelements teilbar ist und
ii) ein Filterelement, wobei das Filterelement als Wickelfilter ausgebildet ist, wobei der Wickelfilter mit einer Profildichtung versehen ist, die am Umfang des Filterelements verläuft und die Profildichtung einen Wulst bildet, welcher zwischen den beiden Gehäuseteile einspannbar ist,
iii) wobei dem Filterelement ein Vorfilter vorgeschaltet ist, der als Zyklonvorabscheider ausgeführt ist.

2. Filtersystem nach Anspruch 1 wobei der Wickelfilter als Kern eine Kunststoffplatte in Form eines flachen Kunststoffelementes aufweist, welches an der Anströmseite mit einem Griff versehen ist, der sich axial, ausgehend von dem Wickelfilter nach außen erstreckt.

3. Filtersystem nach einem der Ansprüche 1 oder 2, **dadurch gekennzeichnet, dass** der Wulst näherungsweise rechteckförmig gestaltet ist.

4. Filtersystem nach einem der Ansprüche 1 bis 3, **dadurch gekennzeichnet, dass** das Filterelement ein Gehäusemittelteil aufweist welches zwischen den beiden Gehäusehälften angeordnet ist.

5. Filtersystem nach Anspruch 4, **dadurch gekennzeichnet, dass** die Verbindung des Gehäusemittelteils mit den Gehäusehälften über Spannbänder erfolgt.

6. Filtersystem nach einem der vorherigen Ansprüche, **dadurch gekennzeichnet, dass** dem Filterelement ein Sekundärfilter nachgeschaltet ist.

7. Filtersystem nach einem der vorherigen Ansprüche, **dadurch gekennzeichnet, dass** das Gehäuse reinluftseitig mit einem Anschlussstutzen versehen ist zum Befestigen eines Reinluftrohres, wobei der Übergang zwischen Filterelement und Anschlussstutzen des Gehäuses im Wesentlichen kegelförmig gestaltet ist.

8. Filtersystem nach einem der vorherigen Ansprüche, **dadurch gekennzeichnet, dass** der Rohlufteintrittsquerschnitt im Wesentlichen rechteckförmig gestaltet ist und der Übergang zwischen den rechteckförmigen Querschnitt und dem runden bzw. ovalen Filterelement strömungsgünstig verläuft.

9. Filterelement nach einem der vorherigen Ansprüche, **dadurch gekennzeichnet, dass** die Profildichtung aus PUR-Schaum besteht.
